# EUROPÄISCHE PATENTANMELDUNG

(11) **EP 4 775 407 A1**
(43) Veröffentlichungstag der Anmeldung: **15.07.2026**
(21) Anmeldenummer: 25151753.8
(22) Anmeldetag: 14.01.2025
(51) Int. Cl.: B60B 3/14, F16B 39/22

(54) **VORRICHTUNG ZUM SICHERN EINES RADES AUF EINER RADNABE EINES KRAFTFAHRZEUGS**

(71) Anmelder: CP Tech GmbH, 33142 Büren (DE)
(72) Erfinder: BUNSE, Benedikt, 33142 Büren- Harth (DE); SANDER, Bastian, 58239 Schwerte (DE); PLESSE, Hannes, 33189 Schlangen (DE)
(74) Vertreter: Patentanwälte Dörner & Kötter PartG mbB

(57) **Zusammenfassung**

Die Erfindung betrifft eine Vorrichtung zum Sichern eines Rades auf einer Radnabe eines Kraftfahrzeugs, mit einer Radmutter (3), die auf einem Außengewinde (16) des Achszapfens (11) der Radnabe (1) aufschraubbar ist, und einem in dem Achszapfen (11) angeordneten Sperrkörper (2), der in dem Achszapfen (11) axial in eine Freigabestellung und eine Sperrstellung bewegbar ist und der Mittel zur Drehhemmung der Radmutter (3) aufweist, wobei der Sperrkörper (2) in dem Achszapfen (11) drehfest verschiebbar geführt und über eine Feder (4) gegen die Radmutter (3) vorgespannt ist, wobei der Sperrkörper (2) an seiner der Radmutter (3) zugewandten Stirnseite eine Stirnrastverzahnung (21) aufweist, die mit einer an der Radmutter (3) vorhandenen Stirnrastverzahnung (35) zusammenwirkt und wobei in der Radmutter (3) stirnseitig eine Öffnung angeordnet ist.

## Beschreibung

Die Erfindung betrifft eine Vorrichtung zum Sichern eines Rades auf einer Radnabe eines Kraftfahrzeugs nach dem Oberbegriff des Patentanspruchs 1.

Insbesondere bei Kraftfahrzeugen des Rennsports sind die Räder auf der jeweiligen Radnabe zur Minimierung der für einen Radwechsel erforderlichen Zeit über eine zentrale Radmutter befestigt, die zentral auf den Achszapfen der Radnabe aufgeschraubt wird. Es sind unterschiedliche Lösungen bekannt, um ein unbeabsichtigtes Lösen der Radmutter und des Rades während der Fahrt sicher zu verhindern. So ist beispielsweise in der DE 38 44 169 vorgeschlagen, die zentrale Radmutter mittels radial nach außen verstellbarer Rastkugeln zu sichern, die in Aufnahmen eines innenliegenden Verriegelungsabschnitts der Radmutter einrasten. In der DE 102 07 815 A1 ist ein Radsicherungssystem zur Lagesicherung einer Felge auf einer Radnabe mittels einer Radmutter beschrieben, bei dem die Radmutter mittels einer, in der Radnabe angeordneten mechanischen Stelleinrichtung, die wenigstens einen über einen Stellelement betätigbares Sicherungsbolzen aufweist, der in Verriegelungsstellung auf der Radnabe durch einen ersten Anschlag des Sicherungsbolzens axial fixiert ist. Der Sicherungsbolzen weist einen zweiten Anschlag auf und wirkt mit einer Kontur der Radmutter zusammen, wodurch eine radiale Bewegung des Sicherungsbolzens entgegen der Kraft des Stellelements verhindert ist.

Der vorliegenden Erfindung liegt die Aufgabe zu Grunde, eine verbesserte oder zumindest eine alternative Vorrichtung zum Sichern eines Rades auf einer Radnabe eines Kraftfahrzeugs insbesondere für den Rennsport bereitzustellen, die einen einfachen Aufbau aufweist, eine zügige Montage und Demontage eines Rades auf einer Radnabe ermöglicht und ein unbeabsichtigtes Lösen der Radmutter während der Fahrt zuverlässig verhindert. Gemäß der Erfindung wird diese Aufgabe durch ein Schiebetor mit den Merkmalen des Patentanspruchs 1 gelöst.

Mit der Erfindung ist eine Vorrichtung zum Sichern eines Rades auf einer Radnabe eines Kraftfahrzeugs insbesondere für den Rennsport bereitgestellt, die einen einfachen Aufbau aufweist, eine zügige Montage und Demontage eines Rades auf einer Radnabe ermöglicht und ein unbeabsichtigtes Lösen der Radmutter während der Fahrt zuverlässig verhindert. Dadurch, dass der Sperrkörper in dem Achszapfen drehfest verschiebbar geführt und über eine Feder gegen die Radmutter vorgespannt ist, wobei der Sperrkörper an seiner der Radmutter zugewandten Stirnseite eine Stirnrastverzahnung aufweist, die mit einer an der Radmutter vorhandenen Stirnrastverzahnung zusammenwirkt, ist ein ungehindertes Aufschrauben der Radmutterbei gleichzeitiger Drehhemmung in Löserichtung bewirkt. Durch die in der Radmutter stirnseitig angeordnete Öffnung, die vorzugsweise durch eine zentrisch angeordnete axiale Bohrung gebildet ist, kann ein Werkzeug eingeführt und der Sperrkörper entgegen der Federvorspannung verschoben werden, wodurch die Drehhemmung zum Lösen der Radmutter einfach aufgehoben werden kann.

Unter einer Stirnrastverzahnung ist vorstehend eine Stirnverzahnung in Art einer Hirth-Verzahnung zu verstehen, deren Zähne jedoch eine sägezahnförmige Kontur aufweisen. Hierbei besitzt jeder Zahn eine steile Sperrflanke und eine flacher geneigte Gleitflanke. Die Sperrflanke kann vertikal in Achsrichtung oder auch nach innen geneigt, also in Neigerichtung der Gleitflanke ausgeführt sein. Die Gleitflanke weist hingegen einen geringen Steigungswinkel auf, der vorzugweise kleiner gleich 45° beträgt. Der Steigungswinkel ist der mit dem Zahngrund eingeschlossene Winkel. Liegen zwei Stirnrastverzahnungen aufeinander, so gleiten deren Gleitflanken in einer Drehrichtung - vorliegend in Schraubrichtung der Radmutter - aneinander, in der anderen Drehrichtung - vorliegend in Löserichtung der Radmutter - verkeilen sich die Sperrflanken, wodurch eine weitere Drehung blockiert ist.

In Weiterbildung der Erfindung ist der Sperrkörper an seiner Außenmantelfläche zumindest bereichsweise mit Rippen versehen, die in Nuten eingreifen, die hierzu in der Innenwand des zumindest bereichsweise hohlzylindrisch ausgebildeten Achszapfens angeordnet sind. Hierdurch ist eine geführte axiale Verschiebung des Sperrkörpers erzielt, wodurch ein Verkanten des Sperrkörpers in dem Achszapfen verhindert ist.

In Ausgestaltung der Erfindung sind die Rippen des Sperrkörpers durch wenigstens eine Geradverzahnung gebildet und/oder die Nuten des Achszapfens sind durch eine in dem Achszapfen angeordnete Innengeradverzahnung gebildet. Hierdurch ist eine einfach zu realisierende, drehfeste und zugleich verschiebbare Lagerung des Sperrkörpers ermöglicht.

In weiterer Ausgestaltung der Erfindung weist der Sperrkörper wenigstens einen Anschlag, der mit einem an dem Achszapfen angeordneten Anschlag zusammenwirkt, wodurch der axiale Verfahrweg des Sperrkörpers in dem Achszapfen begrenzt ist. Hierdurch ist ein unbeabsichtigtes Herausgleiten des Sperrkörpers aus dem Achszapfen beim Lösen der Radmutter verhindert.

In Weiterbildung der Erfindung ist dass der wenigstens eine Anschlag des Sperrkörpers durch wenigstens zwei Führungsstifte gebildet, die jeweils in einer in dem Achszapfen angeordneten Kulisse geführt sind. Hierdurch ist ein definierter Verfahrweg erzielt.

In Ausgestaltung der Erfindung sind die Kulissen durch axiale Langlöcher gebildet, in welche die Führungsstifte hineinragen. Bevorzugt weisen die Führungsstifte ein Gewinde auf, mit dem sie in hierzu in dem Sperrkörper angeordnete radiale Gewindebohrungen eingeschraubt sind. Hierdurch ist eine einfache Montage ermöglicht. Die Führungsstifte können nach Positionierung des Sperrkörpers entgegen der Federkraft durch die Langlöscher in die Gewindebohrungen eingeschraubt werden, wonach der Sperrkörper mit den Führungsstiften durch die Federvorspannung an der Endposition der Langlöcher anliegt. Selbstverständlich sind auch andere Befestigungen er Führungsstifte an dem Sperrkörper möglich. Beispielsweise können diese in vorhandenen Bohrungen eingeklebt oder auch mit entsprechenden Rastbohrungen verrastet sein. Auch ein Verschweißen der Führungsstifte durch die Langlöcher hindurch wäre möglich. Zur Reparaturzwecken erscheint jedoch eine lösbare Befestigung der Führungsstifte, die beispielsweise durch Madenschrauben gebildet sein können, an dem Sperrkörper am zweckmäßigsten.

Vorteilhaft sind in dem Sperrkörper umlaufend jeweils eine Rippe unterbrechend Gewindebohrungen zum Einschrauben eines Führungsstiftes angeordnet. Hierdurch ist ein Einschrauben eines Führungsstiftes durch ein Langloch in jeder Drehposition des Sperrkörpers ermöglicht, wodurch die Montage erleichtert ist.

In weiterer Ausgestaltung der Erfindung ist in den Achszapfen ein Sicherungsring, bevorzugt ein Seegering eingesetzt, der einen axialen Anschlag für den Sperrkörper ausbildet. Hierdurch ist eine alternative oder auch zusätzliche axiale Verliersicherung des Sperrkörpers erzielt.

In Weiterbildung der Erfindung weist die Radmutter einen Einsatz auf, der die Stirnrastverzahnung aufweist und der mit der Radmutter drehfest verbunden ist. Hierdurch ist die Verwendung eines besonders widerstandsfähigen Materials für die Stirnrastverzahnung ermöglicht, wobei die Radmutter selbst aus einem anderen Material hergestellt sein kann. Zur drehfesten Befestigung ist der Einsatz bevorzugt über eine Verzahnung mit der Radmutter verbunden, die zur axialen Fixierung beispielsweise zusätzlich verklebt oder auch verpresst ausgeführt sein kann. Alternativ kann der Einsatz auch über einen Sicherungsring axial gesichert sein.

In Ausgestaltung der Erfindung weist der Sperrkörper zentrisch eine axiale Gewindebohrung auf, die bei Anlage an der Radmutter mit der zentrischen Bohrung fluchtet. Hierdurch ist eine zusätzliche Sicherung der Stirnrastverbindung zwischen Sperrkörper und Radmutter mittels einer in die Innengewindebohrung des Sperrkörpers einzuschraubenden Schraube ermöglicht. Darüber hinaus ist eine axiale Sicherung des Einsatzes der Radmutter bewirkt, die für die Funktionserfüllung als Gegenlager zum federgelagerten Sperrkörper dient.

In weiterer Ausgestaltung der Erfindung weist der Sperrkörper die Innengewindebohrung umgebend einen zumindest bereichsweise kreisförmig umlaufenden Steg auf, der bei Anlage des Sperrkörpers an der Radmutter durch deren axiale Bohrung hindurchtritt, wobei die Höhe des Steges bevorzugt geringer gewählt ist, als die Länge der er axialen Bohrung. Hierdurch ist eine Zentrierung des Sperrkörpers an der Radmutter bei gleichzeitiger radialer Abstützung der Bohrung ermöglicht. Weiterhin ist über diesen Steg eine optische Kontrolle eines erfolgten Eingriffs des Sperrkörpers ermöglicht.

In Weiterbildung der Erfindung weist der Sperrkörper an seiner der Stirnrastverzahnung gegenüberliegenden Seite einen vorzugsweise zylindrischen Hohlraum auf, in dem die Feder zumindest bereichsweise angeordnet ist. Hierdurch ist eine Reduzierung des erforderlichen Bauraums erzielt. Darüber hinaus ist hierdurch das Gewicht des Sperrkörpers reduziert.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer Vorrichtung zum Sichern eines Rades auf einer Radnabe eines Kraftfahrzeugs im teilschnitt;
- Figur 2: die Vorrichtung aus Figur 1 in einer Explosionsdarstellung;

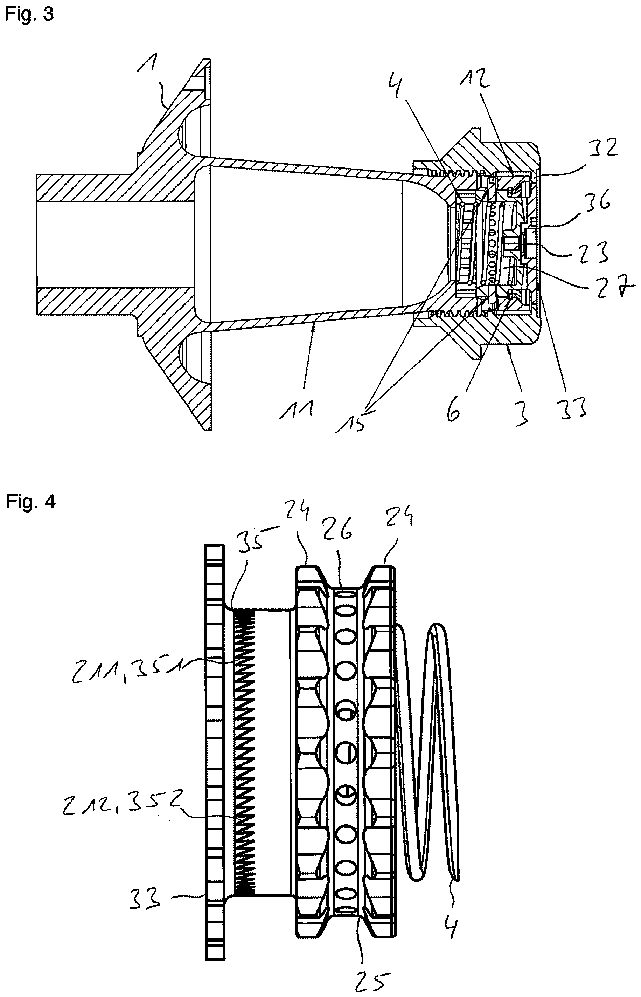

- Figur 3: die Darstellung der Vorrichtung aus Figur 1 im Längsschnitt und
- Figur 4: die schematische Darstellung des Sperrkörpers der Vorrichtung aus Figur 1 mit anliegendem Einsatz der Radmutter.

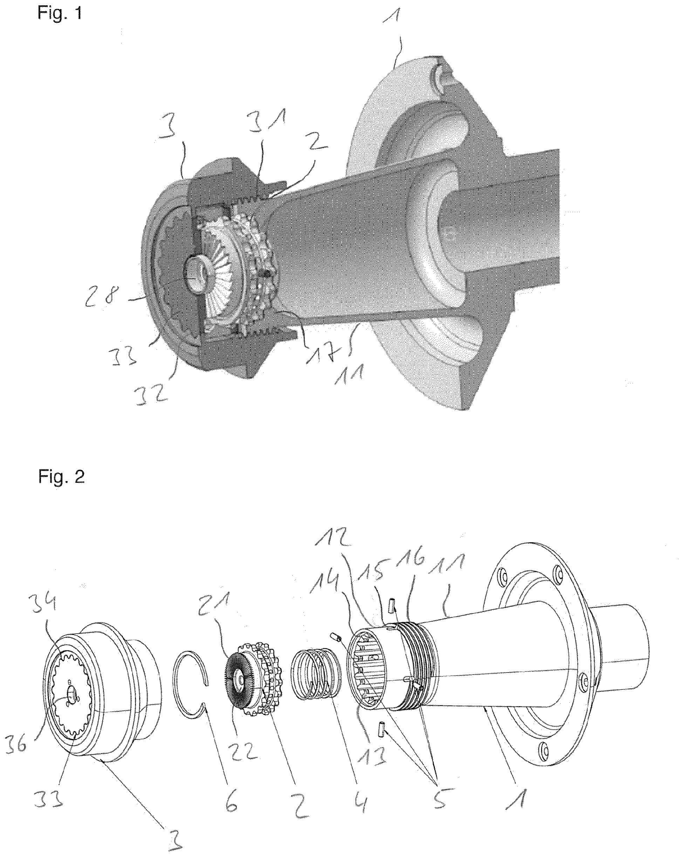

Die als Ausführungsbeispiel gewählte Vorrichtung zum Sichern eines Rades auf einer Radnabe eines Kraftfahrzeugs gemäß Figur 1 umfasst eine Radnabe 1 mit einem Achszapfen 11, der einen Sperrkörper 2 aufnimmt und auf den eine Radmutter 3 aufgeschraubt ist, wobei der Sperrkörper 2 über eine Feder 4 gegen die Radmutter 3 vorgespannt ist.

Der Achszapfen 11 der Radnabe 1 weist endseitig einen hohlzylindrischen Abschnitt 12 auf, in dem innen umlaufend regelmäßig zueinander beabstandet in Axialrichtung verlaufende Rippen 13 in Art einer Innengeradverzahnung angeordnet sind. Endseitig grenzen die Rippen 13 an eine umlaufende Ringnut 14, in die ein Seegering 6 eingesetzt ist. Beabstandet zu der Ringnut 14 sind in den hohlzylindrischen Abschnitt 12 umlaufend jeweils um 90° versetzt zueinander vier sich in Axialrichtung erstreckende Langlöcher 15 eingebracht. Die Langlöcher 15 grenzen an ihrer der Ringnut 14 gegenüberliegenden Seite an ein au-ßen an dem hohlzylindrischen Abschnitt 12 vorhandenes Außengewinde 16. Innen ist der hohlzylindrische Abschnitt 12 durch einen ringförmigen Steg 17 begrenzt.

Der Sperrkörper 2 ist im Wesentlichen zylindrisch ausgebildet und weist an seiner Stirnseite eine ringförmig ausgebildete Stirnrastverzahnung 21 auf, die eine zentriert angeordnete Bohrung 22 begrenzt, die in einer zentriert angeordneten durchmesserreduzierten axiale Gewindebohrung 23 mündet. Die Zähne der Stirnrastverzahnung 21 weisen eine sägezahnförmige Kontur auf. Hierbei besitzt jeder Zahn eine steile Sperrflanke 211 und eine flacher geneigte Gleitflanke 212. Die Sperrflanke 211 ist im Ausführungsbeispiel vertikal, das heißt mit einem Winkel von 90° zum Zahngrund, an diesen angestellt. Die Gleitflanke weist im Ausführungsbeispiel einen Steigungswinkel von 40° auf.

Beabstandet zu der Stirnrastverzahnung 21 ist ein außendurchmesservergrö-ßerter Absatz angeordnet, der umlaufend in Axialrichtung verlaufende regelmäßig zueinander beabstandete Rippen 24 in Art einer Geradverzahnung aufweist. Mittig sind die Rippen 24 durch eine Ringnut 25 unterbrochen. Jeweils in die durch die Ringnut 25 bewirkte Unterbrechung eine Rippe 24 eine radiale Gewindebohrung 26 zur Aufnahme eines Führungsstiftes 5 eingebracht. Auf seiner der Stirnrastverzahnung 21 abgewandten Seite weist der Sperrkörper 2 einen zylindrischen Hohlraum 27 auf, der eine in Form einer Schraubendruckfeder ausgebildete Feder 4 aufnimmt, die in der Radnabe 1 an dem ringförmigen Steg 17 anliegt.

Die Radmutter 3 ist topfförmig ausgebildet und weist an ihrem offenen Ende ein Innengewinde 31 zum Aufschrauben auf das Außengewinde 16 der Radnabe 1 auf. In ihrem dem Innengewinde 31 gegenüberliegende Boden 32 ist ein Einsatz 33 eingepresst, der über eine Verzahnung 34 mit dem Boden 32 drehfest verbunden ist. Auf seiner dem Innengewinde zugewandten Seite weist der Einsatz 33 eine ringförmige Stirnrastverzahnung 35 auf, die entsprechend der Stirnrastverzahnung 21 des Sperrkörpers 2 ausgebildet ist und die eine zentriert angeordnete Bohrung 36 begrenzt, die mit der axialen Gewindebohrung 23 des Sperrkörpers 2 fluchtet. Die Zähne der Stirnrastverzahnung 35 weisen entsprechend der Stirnrastverzahnung eine sägezahnförmige Kontur auf, wobei die Sperrflanke 351 der Zähne vertikal, an den Zahngrund angestellt sind und die Gleitflanken einen Steigungswinkel von 40° aufweisen. Über einen - nicht dargestellten - Sicherungsring ist eine axiale Sicherung des Einsatzes 33 ermöglicht. Alternativ kann der Einsatz 33 zur axialen Sicherung auch mit der Radmutter 3 verpresst oder verklebt sein.

In Ausgangsstellung, dass heißt bei entfernter Radmutter 3, ist der Sperrkörper 2 mit seinen Rippen 24 zwischen die Rippen 13 des hohlzylindrischen Abschnitts 12 des Achszapfens 11 eingeschoben und über vier Führungsstifte 5, die durch die Langlöcher 15 durch diese hervorragend in die mit den Langlöchern 15 fluchtenden radialen Gewindebohrungen 26 eingeschraubt sind, durch die Feder 4 vorgespannt in der Radnabe 1 gehalten. In dieser Position liegt der Sperrkörper 2 an dem Seegering 6, der in die Ringnut 14 des Achszapfens 11 eingebracht ist, an.

Zur Fixierung einer auf die Radnabe 1 aufgeschobenen - nicht dargestellten - Felge wird die Radmutter 3 mit ihrem Innengewinde 31auf das Außengewinde 16 des Achszapfens 11 aufgeschraubt. Im Ausführungsbeispiel gemäß Figur 1 ist an dem Sperrkörper 2 die axiale Gewindebohrung 23 umgebend ein umlaufender, hülsenartiger Steg 28 angeordnet, der bei Anlage des Sperrkörpers 2 an der Radmutter 3 in deren axiale Bohrung hineinragt, wodurch die Zentrierung der Radmutter 3 erleichtert ist. Bei Drehung der Radmutter 3 in Anzugrichtung gleiten die Gleitflanken 352 der Stirnrastverzahnung 35 des Einsatzes 33 der Radmutter 3 entlang der Gleitflanken 212 der Stirnradverzahnung 21 des Sperrkörpers 2, die über die Feder 4 gegen die Stirnrastverzahnung 35 vorgespannt ist. Der Sperrkörper 2 wird dabei entlang der Rippen 13 des Achszapfens 11 nach hinten, das heißt in die dem Seegering 6 entgegengesetzte Richtung, bewegt. Bei einer Drehung der Radmutter in Löserichtung schlagen die Sperrflanken 352 der Stirnrastverzahnung 35 der Radmutter 3 an die Sperrplanken 211 der Stirnradverzahnung 21 des Sperrkörpers 2 an, der über seine Rippen 24 zwischen den Rippen 13 der Radnabe 1 drehfest gehalten ist. Eine Drehung der Radmutter 3 in Löserichtung ist hierdurch verhindert. Zur zusätzlichen Sicherung kann durch die Bohrung 36 der Radmutter 3 eine - nicht dargestellte - Sicherungsschraube in die axiale Gewindebohrung 23 des Sperrkörpers 2 eingeschraubt werden, wodurch die Stirnrastverzahnung 21 des Sperrkörpers 2 gegen die Stirnrastverzahnung 35 der Radmutter 3 verspannt wird.

Zum Lösen der Radmutter 3 wird - nach Entfernung einer ggf. vorhandenen Sicherungsschraube aus der axialen Gewindebohrung 23 des Sperrkörpers 2 - der Sperrkörper 2 über ein Werkzeug, das durch die Bohrung 36 der Radmutter 2 geführt wird, entgegen der Vorspannung der Feder 4 nach hinten geschoben, wodurch die Stirnrastverzahnung 21 des Sperrkörpers 2 außer Eingriff mit der Stirnrastverzahnung 35 der Radmutter 3 bewegt wird. Die Sperrwirkung ist hierdurch aufgehoben, wodurch eine Bewegung der Radmutter 3 in Löserichtung ermöglicht ist.

Das Werkzeug zur Verschiebung des Sperrkörpers 2 ist vorzugsweise in ein Werkzeug zur Drehung der Radmutter 3 integriert. Es versteht sich von selbst, dass die Radmutter 3 zur formschlüssigen Verbindung mit einem Werkzeug eine unrunde, insbesondere eine polygone Außenkontur, bevorzugt eine Sechskantkontur aufweisen kann.

## Patentansprüche

1. Vorrichtung zum Sichern eines Rades auf einer Radnabe eines Kraftfahrzeugs, mit einer Radmutter (3), die auf einem Außengewinde (16) des Achszapfens (11) der Radnabe (1) aufschraubbar ist, und einem in dem Achszapfen (11) angeordneten Sperrkörper (2), der in dem Achszapfen (11) axial in eine Freigabestellung und eine Sperrstellung bewegbar ist und der Mittel zur Drehhemmung der Radmutter (3) aufweist, **dadurch gekennzeichnet, dass** der Sperrkörper (2) in dem Achszapfen (11) drehfest verschiebbar geführt und über eine Feder (4) gegen die Radmutter (3) vorgespannt ist, wobei der Sperrkörper (2) an seiner der Radmutter (3) zugewandten Stirnseite eine Stirnrastverzahnung (21) aufweist, die mit einer an der Radmutter (3) vorhandenen Stirnrastverzahnung (35) zusammenwirkt und wobei in der Radmutter (3) stirnseitig eine Öffnung angeordnet ist.

2. Vorrichtung nach Anspruch 1, **dadurch gekennzeichnet, dass** die Öffnung durch eine zentrisch angeordnete axiale Bohrung (36) gebildet ist.

3. Vorrichtung nach Anspruch 1 oder 2, **dadurch gekennzeichnet, dass** der Sperrkörper (2) an seiner Außenmantelfläche zumindest bereichsweise mit Rippen (24) versehen ist, die in Nuten eingreifen, die hierzu in der Innenwand des zumindest bereichsweise hohlzylindrisch ausgebildeten Achszapfens (11) angeordnet sind.

4. Vorrichtung nach Anspruch 3, **dadurch gekennzeichnet, dass** die Rippen (24) des Sperrkörpers (2) durch wenigstens eine Geradverzahnung gebildet sind und/oder die Nuten des Achszapfens (11) durch eine in dem Achszapfen angeordnete Innengeradverzahnung gebildet sind.

5. Vorrichtung nach einem der vorgenannten Ansprüche, **dadurch gekennzeichnet, dass** der Sperrkörper (2) wenigstens einen Anschlag aufweist, der mit einem an dem Achszapfen (11) angeordneten Anschlag zusammenwirkt, wodurch der axiale Verfahrweg des Sperrkörpers (2) in dem Achszapfen (11) begrenzt ist.

6. Vorrichtung nach Anspruch 5, **dadurch gekennzeichnet, dass** der wenigstens ein Anschlag des Sperrkörpers durch wenigstens zwei Führungsstifte (5) gebildet ist, die jeweils in einer in dem Achszapfen (11) angeordneten Kulisse geführt sind.

7. Vorrichtung nach Anspruch 6, **dadurch gekennzeichnet, dass** die Kulissen durch axiale Langlöcher (15) gebildet sind, in welche die Führungsstifte (5) hineinragen, wobei die Führungsstifte (5) vorzugsweise ein Gewinde aufweisen, mit dem sie in hierzu in dem Sperrkörper (2) angeordnete radiale Gewindebohrungen (26) eingeschraubt sind.

8. Vorrichtung nach einem der Ansprüche 5 bis 7, **dadurch gekennzeichnet, dass** in den Achszapfen (11) ein Sicherungsring, bevorzugt ein Seegering (6) eingesetzt ist, der einen axialen Anschlag für den Sperrkörper (2) ausbildet.

9. Vorrichtung nach einem der vorgenannten Ansprüche, **dadurch gekennzeichnet, dass** die Radmutter (3) einen Einsatz (33) aufweist, der die Stirnrastverzahnung (35) aufweist und der mit der Radmutter (3) vorzugsweise über eine Verzahnung drehfest verbunden ist.

10. Vorrichtung nach einem der Ansprüche 2 bis 9, **dadurch gekennzeichnet, dass** der Sperrkörper (2) zentrisch eine axiale Gewindebohrung (23) aufweist, die bei Anlage an der Radmutter mit der zentrischen Bohrung fluchtet.

11. Vorrichtung nach Anspruch 10, **dadurch gekennzeichnet, dass** der Sperrkörper (2) die Gewindebohrung (23) umgebend einen zumindest bereichsweise kreisförmig umlaufenden Steg (28) aufweist, der bei Anlage des Sperrkörpers (2) an der Radmutter (3) in deren axiale Bohrung (36) hineinragt, wobei die Höhe des Steges (28) bevorzugt geringer gewählt ist, als die Länge der axialen Bohrung (36).

12. Vorrichtung nach einem der vorgenannten Ansprüche, **dadurch gekennzeichnet, dass** der Sperrkörper (2) an seiner der Stirnrastverzahnung (21) gegenüberliegenden Seite einen vorzugsweise zylindrischen Hohlraum (27) aufweist, in dem die Feder (4) zumindest bereichsweise angeordnet ist.
